# EUROPÄISCHE PATENTSCHRIFT

(11) **EP 2 232 617 B1**
(45) Veröffentlichungstag und Bekanntmachung des Hinweises auf die Patenterteilung: **02.05.2012**
(21) Anmeldenummer: 08861832.7
(22) Anmeldetag: 25.11.2008
(51) Int. Cl.: H01M 8/02, H01M 8/12

(54) **BIPOLARPLATTE UND VERFAHREN ZUM HERSTELLEN EINER SCHUTZSCHICHT AN EINER BIPOLARPLATTE**
BIPOLAR PLATE AND METHOD FOR PRODUCING A PROTECTIVE LAYER ON A BIPOLAR PLATE
PLAQUE BIPOLAIRE ET PROCÉDÉ DE RÉALISATION D'UNE COUCHE DE PROTECTION SUR UNE PLAQUE BIPOLAIRE

(30) Priorität: 14.12.2007 DE 102007060272
(43) Veröffentlichungstag der Anmeldung: 29.09.2010
(73) Patentinhaber: ElringKlinger AG, 72581 Dettingen (DE)
(72) Erfinder: KIEFER, Thomas, 72574 Bad Urach (DE)
(74) Vertreter: Hoeger, Stellrecht & Partner Patentanwälte
(86) Internationale Anmeldenummer: PCT/EP2008/009952
(87) Internationale Veröffentlichungsnummer: WO 2009/077058

(56) Entgegenhaltungen:
- WO-A-96/28855
- DE-A1- 10 050 010
- DE-A1- 10 306 647
- DE-A1-102005 015 755
- DE-A1-102007 018 261
- H. LING ET AL.: "Electrical and thermal properties of spinels" SOLID OXIDE FUEL CELLS IX (SOFC-IX) : PROCEEDINGS OF THE INTERNATIONAL SYMPOSIUM, Bd. 2005-07, 20. Mai 2005 (2005-05-20), Seiten 1866-1873, XP008103001 ISBN: 978-1-56677-465-9 [gefunden am 2005-05-20]
- A. PETRIC ET AL.: "Electrical conductivity and thermal expansion of spinels at elevated temperatures" JOURNAL OF THE AMERICAN CERAMIC SOCIETY, Bd. 90, Nr. 5, 1. Mai 2007 (2007-05-01), Seiten 1515-1520, XP002470445 ISSN: 0002-7820
- M.R. BATENI ET AL.: "Spinel coatings for UNS 430 stainless steel interconnects" SURFACE AND COATINGS TECHNOLOGY, Bd. 201, Nr. 8, 13. Dezember 2006 (2006-12-13), Seiten 4677-4684, XP005802155 ISSN: 0257-8972
- M. STANISLOWSKI ET AL.: "Reduction of chromium vaporization from SOFC interconnectors by highly effective coatings" JOURNAL OF POWER SOURCES, Bd. 164, Nr. 2, 20. Januar 2007 (2007-01-20), Seiten 578-589, XP005737110 ISSN: 0378-7753
- Z. YANG ET AL.: "(Mn,Co)3O4 spinel coatings on ferritic stainless steels for SOFC interconnect applications" INTERNATIONAL JOURNAL OF HYDROGEN ENERGY, Bd. 32, Nr. 16, 1. November 2007 (2007-11-01), Seiten 3648-3654, XP022350367 ISSN: 0360-3199
- Z. YANG ET AL.: "Mn1.5Co1.5O4 spinel protection layers on ferritic stainless steels for interconnect applications" ELECTROCHEMICAL AND SOLID-STATE LETTERS, Bd. 8, Nr. 3, 26. Januar 2005 (2005-01-26), Seiten 168-170, XP002470448 ISSN: 1099-0062 in der Anmeldung erwähnt
- Y. LARRING ET AL.: "Spinel and perovskite functional layers between Plansee metallic interconnect (Cr-5 wt % Fe-1 wt % Y2O3) and ceramic (La0.85Sr0.15)0.91MnO3 cathode materials for solid oxide fuel cells" JOURNAL OF THE ELECTROCHEMICAL SOCIETY, Bd. 147, Nr. 9, 1. September 2000 (2000-09-01), Seiten 3251-3256, XP007907777 ISSN: 0013-4651

## Beschreibung

Die vorliegende Erfindung betrifft eine Bipolarplatte für eine Brennstoffzelleneinheit, wobei die Bipolarplatte eine Trägerschicht und eine Schutzschicht umfasst, wobei die Schutzschicht ein Oxidsystem umfasst.

Da eine Brennstoffzelleneinheit nur eine geringe Einzelzellspannung von ungefähr 0,4 Volt bis ungefähr 1,2 Volt (je nach Last) aufweist, ist eine Reihenschaltung von mehreren elektrochemischen Zellen in einem Brennstoffzellenstack erforderlich, wodurch die Ausgangsspannung in einen aus anwendungstechnischer Sicht interessanten Bereich skaliert wird. Hierfür werden die einzelnen elektrochemischen Zellen mittels sogenannter Bipolarplatten (auch als Interkonnektoren bezeichnet) verbunden.

Eine solche Bipolarplatte muss die folgenden Anforderungen erfüllen:
- Verteilung der Medien (Brenngas und/oder Oxidationsmittel).
- Ausreichende elektrische Leitfähigkeit, da innerhalb des Brennstoffzellenstacks die an der Wasserstoffseite (Anode) erzeugten Elektronen durch die Bipolarplatten geleitet werden, um der Luftseite (Kathode) der nächsten elektrochemischen Zelle zur Verfügung zu stehen. Um die elektrischen Verluste hierbei gering zu halten, muss der Werkstoff für die Bipolarplatten eine ausreichend hohe elektrische Leitfähigkeit aufweisen.
- Ausreichende Korrosionsbeständigkeit, da die typischen Betriebsbedingungen einer Brennstoffzelleneinheit (Betriebstemperatur ungefähr 800°C, oxidierende/reduzierende Atmosphäre, feuchte Luft) korrosionsfördernd wirken. Aus diesem Grund werden an die Korrosionsbeständigkeit des Materials der Bipolarplatte hohe Anforderungen gestellt.

Üblicherweise werden ferritische, chromoxidbildende Edelstähle als Material für die Bipolarplatten von Hochtemperaturbrennstoffzellen eingesetzt. Ein Grund hierfür ist die relativ gute elektrische Leitfähigkeit der selbstbildenden Chromoxidschicht im Vergleich zu den isolierenden Oxidschichten, die von anderen Hochtemperaturstählen bzw. -legierungen ausgebildet werden (z.B. von Aluminiumoxid- oder Siliziumoxidbildnern).

Bei Temperaturerhöhung bildet sich auf der Oberfläche eines Chromoxid-bildenden Edelstahls Chromoxid. Unter den Betriebsbedingungen einer Brennstoffzelle entstehen aus diesem Chromoxid flüchtige Chromverbindungen. Durch diese "Chromverdampfung" kommt es, insbesondere im Langzeitbetrieb der Brennstoffzelleneinheit, zu einer Vergiftung der Kathode, wodurch sich die Stromausbeute drastisch reduziert.

Zur Verhinderung der Chromabdampfung wurde bereits vorgeschlagen, bestimmte Elemente (beispielsweise Mn, Ni, Co) in den Stahl der Bipolarplatte zu dotieren, welche das Oxidschichtwachstum beeinflussen und das ursprünglich gebildete Chromoxid in eine chemisch stabilere Form überführen. Durch solche Legierungszusätze kann zwar eine Minimierung der Chromabdampfung erreicht werden, jedoch ist ein nachhaltiger Schutz der Kathode nicht gegeben.

Ferner wurde bereits vorgeschlagen, die Bipolarplatten mit Oxiden oder Oxidmischungen (beispielsweise Oxiden von Mn, Co, Cu) zu beschichten. Durch eine anschließende Temperaturbehandlung werden diese Schichten aufgrund von Festkörperdiffusion verdichtet. Versuche haben gezeigt, dass Mn, Fe und Cr aus dem Stahl der Bipolarplatte in eine solche Schutzschicht diffundieren und dabei für eine Verdichtung sorgen. Die verdichtete Schutzschicht enthält jedoch, bedingt durch Diffusionsprozesse, ebenfalls Chrom. Damit besteht weiterhin die Möglichkeit einer Chromabdampfung, verbunden mit einer erhöhten Degradation der Kathode.

Eine weitere Bipolarplatte mit Schutzschicht ist aus dem Artikel von Zhenguo Yang, Guanguang Xia und Jeffry W. Stevenson: "Mn1,5Co1,5O4 Spinel Protection Layers on Ferritic Stainless Steels for SOFC Interconnect Applications", erschienen in: Electrochemical and Solid-State Letters, Volume 8 (3), Seiten A 168 bis A 170 (2005), bekannt.

Bei der Herstellung der aus dieser Druckschrift bekannten Bipolarplatte wird eine Schutzschicht durch einen Sintervorgang einer nasschemisch aufgebrachten Oxidschicht (Mn_{1,5}Co_{1,5}O₄) unter einer reduzierenden Atmosphäre erzeugt. Bei diesem Verfahren wird eine Paste, welche einen Binder und Oxide der nominalen Zusammensetzung Mn_{1,5}Co_{1,5}O₄ enthält, auf ein Stahlmaterial aufgebracht. Die Versinterung erfolgt in zwei getrennten Temperaturbehandlungsschritten. Beim ersten Temperaturzyklus wird die Gitterstruktur der Schutzschicht durch eine Reduzierung des Sauerstoffpartialdruckes geschwächt, wodurch ein besseres Sinterverhalten eintritt. In einem separaten, darauffolgenden Temperaturbehandlungsschritt wird die Gitterstruktur wieder vollständig oxidiert, d.h. der fehlende Sauerstoff wird wieder in das Gitter eingebaut.

Bei diesem Herstellungsverfahren einer Schutzschicht an einer Bipolarplatte weist die resultierende Mikrostruktur der Schutzschicht zahlreiche Poren und Risse auf. Die so hergestellte Schutzschicht weist daher keine nachhaltige Chrom-Rückhaltefähigkeit auf. Außerdem sind die physikalischen Materialeigenschaften der Schutzschicht, insbesondere deren elektrische Leitfähigkeit und das thermische Ausdehnungsverhalten, nicht optimal an die Anforderungen an eine Bipolarplatte für eine Brennstoffzelleneinheit angepasst.

Die WO 96/28855 A offenbart eine Interkonnektorplatte für eine planare Brennstoffzelle, wobei auf der der Kathode zugewandten Seite der Interkonnektorplatte eine oxidische Schicht mit zumindest einem Metall aus der Gruppe Mn, Fe, Co und Ni angeordnet ist.

Die DE 10 2005 015 755 A1 offenbart ein Verfahren zur Herstellung einer Chromverdampfungsschutzschicht für Chromoxid-bildende Metallsubstrate, wobei auf das Substrat eine Metallschicht, umfassend wenigstens zwei Metalle der Gruppe Co, Cu, Ni, Fe, Zn, Ti, Sn und V, abgeschieden wird, die dann unter Betriebsbedingungen mit Legierungszusätzen aus dem Substrat, insbesondere mit Mangan oder Magnesium, zu einer gasdichten Spinellphase umgewandelt wird.

Die DE 103 06 647 A1 offenbart ein Herstellungsverfahren für eine chromfreie, gasdichte Schutzschicht für Chromoxid-bildende Substrate, die ein Abdampfen von Chrom-VI-Verbindungen verhindert, wobei die Schutzschicht Cu umfasst.

Die DE 100 50 010 A1 offenbart einen Interkonnektor für eine Hochtemperatur-Brennstoffzelle mit einer auf der Oberfläche des Interkonnektors aufgebrachten, elektrisch leitfähigen, oxidischen Schutzschicht, welche ein ternäres Manganmischoxid gemäß der Formel (Mn, M', M")₃O₄ umfasst, wobei M' = Mn, Cr, Co, Ti, Fe, Ni und M" = Mn, Cr, Co, Ti, Fe, Ni, V, Y, W oder Lanthanide sind.

### SOLID OXIDE FUEL CELLS IX: PROCEEDINGS OF THE INTERNATIONAL

SYMPOSIUM, Bd. 2005-07, 20. Mai 2005, Seiten 1866 bis 1873, XP008103001, offenbart die elektrischen und thermischen Eigenschaften von Spinelloxiden und deren Verwendung als Schutzschichten für aus ferritischen Stählen bestehende Interkonnektoren von Festoxid-Brennstoffzellen. Als geeignete Spinelloxide werden insbesondere ternäre Cr-haltige Oxidsysteme beschrieben.

Die Verwendung von verschiedenen binären Spinelloxiden als Schutzschicht für Interkonnektoren von Hochtemperatur-Brennstoffzellen wird beschrieben in den folgenden Dokumenten:
- JOURNAL OF THE AMERICAN CERAMIC SOCIETY, Bd. 90, Nr. 5, 1. Mai 2007, Seiten 1515 bis 1520, XP002470445;
- SURFACE AND COATINGS TECHNOLOGY, Bd. 201, Nr. 8, 13. Dezember 2006, Seiten 4677 bis 4684, XP005802155;
- JOURNAL OF POWER SOURCES, Bd. 164, Nr. 2, 20. Januar 2007, Seiten 578 bis 589, XP005737110;
- INTERNATIONAL JOURNAL OF HYDROGEN ENERGY, Bd. 32, Nr. 16, 1. November 2007, Seiten 3648 bis 3654, XP022350367; und
- JOURNAL OF THE ELECTROCHEMICAL SOCIETY, Bd. 147, Nr. 9, 1. September 2000, Seiten 3251 bis 3256, XP007907777.

Der vorliegenden Erfindung liegt die Aufgabe zugrunde, eine Bipolarplatte der eingangs genannten Art zu schaffen, deren Schutzschicht eine Chromabdampfung auch im Langzeitbetrieb zuverlässig vermindert und die auch die übrigen Anforderungen an eine Bipolarplatte erfüllt.

Diese Aufgabe wird durch eine Bipolarplatte nach Anspruch 1 gelöst.

Es hat sich gezeigt, dass durch die Wahl eines mindestens ternären Oxidsystems für die Schutzschicht gegenüber Schutzschichten aus nur binären Oxidsystemen eine verbesserte Mikrostruktur der Schutzschicht und damit eine verbesserte Reduktion von Chromdiffusion durch die Schutzschicht und von Chromabdampfung erzielt werden kann.

Vorzugsweise weist das Oxidsystem der Schutzschicht eine Spinellstruktur auf.

Günstig ist es, wenn das Oxidsystem mindestens eine Art von Metallkationen aufweist, deren Oxid instabiler als Chromoxid ist (dessen Stabilitätsgrenze im Ellingham-Diagramm also höher liegt als die Stabilitätsgrenze von Chromoxid).

Ferner ist es günstig, wenn das Oxidsystem mindestens eine Art von Metall-kationen aufweist, deren Oxid stabiler als Chromoxid ist (dessen Stabilitätsgrenze im Ellingham-Diagramm also tiefer liegt als die Stabilitätsgrenze von Chromoxid).

Bei der Erfindung ist vorgesehen, dass eine Art von Metallkationen des Oxidsystems der Schutzschicht Mn ist.

Ferner ist eine Art von Metallkationen des Oxidsystems der Schutzschicht Co.

Ferner ist eine Art von Metallkationen des Oxidsystems der Schutzschicht Fe.

Durch den Zusatz von Eisen wird die Mikrostruktur (hinsichtlich der Reduktion von Rissen und Poren) der Schutzschicht verbessert. Das Eisen wirkt somit positiv auf das Sinterverhalten der Schutzschicht. Die verbesserte Mikrostruktur der Schutzschicht ist ein Zeichen für eine größere Defektfreiheit der Schutzschicht. Da die Chromdiffusion unter anderem auf Gitterdefekten beruht, ist durch eine defektfreiere Schutzschicht ein nachhaltiger Chromrückhalt gewährleistet.

Der Zusatz von Eisen senkt ferner den thermischen Ausdehnungskoeffizienten der Schutzschicht und passt ihn somit besser an den thermischen Ausdehnungskoeffizienten der anderen Komponenten der Brennstoffzelleneinheit an. Dadurch entstehen geringere mechanische Spannungen während eines Temperaturzyklus (Aufheizen auf Betriebstemperatur und Abkühlen) des Brennstoffzellenstacks.

Ferner kann bei einer eisenhaltigen Schutzschicht auf einen zweiten Temperaturzyklus beim Herstellen der Schutzschicht im Sinterverfahren verzichtet werden. Wenn nur ein einziger Temperaturzyklus (statt einem ersten Temperaturzyklus für die Reduktion der Schutzschicht und einem zweiten Temperaturzyklus für die anschließende Oxidation) gefahren werden muss, so wirkt sich dies positiv auf die Herstellungskosten und auf die Mikrostruktur der Schutzschicht aus.

Bei der Erfindung ist vorgesehen, dass das Oxidsystem Mn-, Co- und Fe-Kationen umfasst.

Die Zusammensetzung der Schutzschicht der Bipolarplatte wird vorzugsweise so gewählt, dass der thermische Ausdehnungskoeffizient α der Schutzschicht von 10·10⁻⁶K⁻¹ bis 20·10⁻⁶K⁻¹, vorzugsweise von 11,5·10⁻⁶K⁻¹ bis 13,5·10⁻⁶K⁻¹, beträgt. Ein solcher thermischer Ausdehnungskoeffizient ist besonders gut an das thermische Ausdehnungsverhalten der anderen Komponenten der Bipolarplatte und der Brennstoffzelleneinheit angepasst.

Die spezifische elektrische Leitfähigkeit σ der Schutzschicht beträgt vorzugsweise von 0,01 S/cm bis 200 S/cm.

Die erfindungsgemäße Bipolarplatte eignet sich insbesondere zur Verwendung in einer Hochtemperatur-Brennstoffzelle, insbesondere einer SOFC (Solid Oxide Fuel Cell), mit einer Betriebstemperatur von beispielsweise mindestens 600°C.

Die vorliegende Erfindung betrifft ferner ein Verfahren zum Herstellen einer Schutzschicht an einer Bipolarplatte für eine Brennstoffzelleneinheit.

Der Erfindung liegt die weitere Aufgabe zugrunde, ein solches Verfahren zu schaffen, wodurch eine Schutzschicht hergestellt wird, die auch im Langzeitbetrieb eine gute Chromrückhaltefähigkeit aufweist und auch die anderen an eine Bipolarplatte zu stellenden Anforderungen erfüllt.

Diese Aufgabe wird erfindungsgemäß durch ein Verfahren zum Herstellen einer Schutzschicht an einer Bipolarplatte für eine Brennstoffzelleneinheit nach Anspruch 4 gelöst.

Durch das Versintern der Schutzschicht in einer reduzierenden Atmosphäre kann die Sintertemperatur (von üblicherweise bis zu 900°C - 1.100°C) herabgesetzt werden (in den Bereich von ungefähr 750°C bis ungefähr 800°C). Ferner kann die Sinterzeit (von üblicherweise 10 Stunden) verkürzt werden (auf beispielsweise höchstens ungefähr 3 Stunden). Hierdurch können Herstellungskosten eingespart und korrosive Vorschädigungen, insbesondere durch das Aufwachsen einer Cr₂O₃-Schicht bei erhöhter Temperatur und eine damit verbundene geringere elektrische Leitfähigkeit, verringert werden. Außerdem wird verhindert, dass der Chromgehalt im Stahlmaterial der Bipolarplatte durch das Aufwachsen einer Cr₂O₃-Schicht zu stark absinkt und das Stahlmaterial dadurch seine Korrosionsbeständigkeit verliert.

Die reduzierende Atmosphäre wird vorzugsweise so gewählt, dass zumindest eines der Metalloxide des Oxidsystems der Schutzschicht instabil wird, so dass die zugehörigen Metall-Kationen eine höhere Reaktivität aufweisen, während die reduzierende Atmosphäre gleichzeitig so gewählt wird, dass unerwünschte Elemente aus dem Grundmaterial der Bipolarplatte (insbesondere Chrom) oxidisch vorliegen. Die oxidische Form bedeutet eine höhere chemische Stabilität und damit eine geringere Reaktionsfähigkeit. Dadurch kann beim Versintern der Schutzschicht eine Verdichtung derselben ohne Eindiffusion von Chrom stattfinden.

Günstig ist es, wenn in der ersten Sinterphase die Temperatur und der Sauerstoffpartialdruck so gewählt werden, dass der durch die Sinter-Temperatur und den Sinter-Sauerstoffpartialdruck definierte Zustandspunkt im Ellingham-Diagramm oberhalb der Stabilitätsgrenze von Chromoxid, aber unterhalb der Stabilitätsgrenze mindestens eines Metalloxids liegt, dessen Metall-Kation im Schutzschicht-Vormaterial enthalten ist.

Die Trägerschicht mit dem Vormaterial wird zwischen dem Erhöhen der Temperatur auf Sintertemperatur und dem Erhöhen des Sauerstoffpartialdrucks nicht abgekühlt. Auf diese Weise kann die Schutzschicht in einem einzigen Temperaturzyklus, ohne dazwischenliegende Abkühlung auf Raumtemperatur, hergestellt werden, was sich positiv auf die Herstellungskosten und die Mikrostruktur der Schutzschicht auswirkt.

Bei einer bevorzugten Ausgestaltung des erfindungsgemäßen Verfahrens wird das Vormaterial nasschemisch auf die Trägerschicht aufgebracht.

Dabei kann das Vormaterial beispielsweise auf die Trägerschicht aufgesprüht werden oder auch im Siebdruckverfahren auf die Trägerschicht aufgebracht werden.

Weitere besondere Ausgestaltungen des erfindungsgemäßen Verfahrens sind Gegenstand der Ansprüche 8 bis 15, deren Merkmale bereits vorstehend im Zusammenhang mit den besonderen Ausgestaltungen der erfindungsgemäßen Bipolarplatte erläutert worden sind.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: ein Ellingham-Diagramm, welches die Stabilitätsgrenzen der Oxide von Chrom, Eisen, Kobalt und Mangan nach Ellingham zeigt;
- Fig. 2: eine mikroskopische Aufnahme eines Schnitts durch ein Substrat aus Crofer 22 APU und einer Schutzschicht mit der Zusammensetzung MnCo_{1,9}Fe_{0,1}O₄, die drei Stunden lang unter reduzierender Atmosphäre bei einer Sintertemperatur von 800°C gesintert worden ist; und

- Fig. 3: einen der Fig. 2 entsprechenden schematischen Schnitt durch eine Bipolarplatte mit einer Schutzschicht und einer zwischen der Schutzschicht und einem Grundmaterial der Bipolarplatte angeordneten Zwischenschicht.

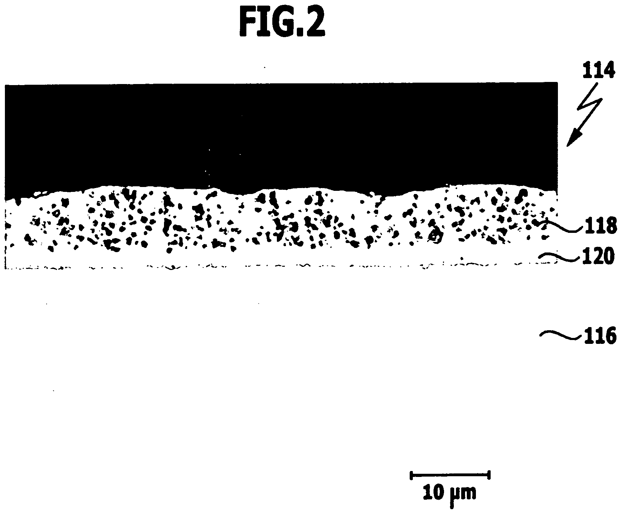

Zur Herstellung der in Fig. 2 in einem ausschnittsweisen Längsschnitt dargestellten Bipolarplatte wird wie folgt vorgegangen:

Es wird eine Trägerschicht aus einem ferritischen, Chromoxid bildenden Edelstahl bereitgestellt, beispielsweise aus dem Edelstahl Crofer 22 APU, welcher folgende Zusammensetzung aufweist: 22,2 Gewichtsprozent Cr; 0,46 Gewichtsprozent Mn; 0,06 Gewichtsprozent Ti; 0,07 Gewichtsprozent La; 0,002 Gewichtsprozent C; 0,02 Gewichtsprozent Al; 0,03 Gewichtsprozent Si; 0,004 Gewichtsprozent N; 0,02 Gewichtsprozent Ni; Rest Eisen.

Auf diese Trägerschicht wird bei einem ersten Ausführungsbeispiel in einem Nasssprühverfahren eine Suspension aufgesprüht, welche folgende Zusammensetzung aufweist: 1 Gewichtsteil eines keramischen Pulvers; 1,5 Gewichtsteile Ethanol; 0,04 Gewichtsteile eines Dispergiermittels (beispielsweise Dolapix ET85); 0,1 Gewichtsteile eines Bindemittels (beispielsweise Polyvinylacetat, PVAC).

Das keramische Pulver für die Suspension wird wie folgt hergestellt:

Zunächst wird eine Menge drei unterschiedlicher Metalloxide, beispielsweise Mn₂O₃, Co₃O₄ und Fe₂O₃, so abgewogen, dass das Zahlenverhältnis der jeweiligen Metallkationen (z.B. Mn, Co, Fe) dem Zahlenverhältnis in der gewünschten Zusammensetzung der herzustellenden Schutzschicht (z.B. 1:1,9:0,1 in der Zusammensetzung MnCo_{1,9}Fe_{0,1}O₄) entspricht.

Die abgewogenen Metalloxid-Pulver werden zusammen mit Ethanol und ZrO₂-Mahlkugeln (mit einem mittleren Durchmesser von ungefähr 3 mm) in eine Polyethylen-Flasche abgefüllt.

Dabei beträgt das Gewichtsverhältnis Pulver:Ethanol:Mahlkugeln ungefähr 1:2:3.

Die Polyethylen-Flasche wird dicht verschlossen und 48 Stunden lang auf einer Rollbank gedreht.

Hierbei beträgt die Drehgeschwindigkeit der Flasche beispielsweise 250 U/min.

Nach der genannten Rotationszeit sollte die Korngröße des Pulvers d₉₀ = 1 µm betragen.

Wenn die genannte Mahldauer von 48 Stunden hierfür nicht ausreicht, muss die Mahlzeit entsprechend verlängert werden.

Eine Korngröße von d₉₀ = 1 µm bedeutet, dass 90 Gewichtsprozent der Partikel des keramischen Pulvers eine Korngröße von höchstens 1 µm aufweisen.

Nach Erreichen der gewünschten Korngröße des keramischen Pulvers werden die ZrO₂-Mahlkugeln aus der Mischung entfernt, und das keramische Pulver wird getrocknet.

Anschließend wird das keramische Pulver bei einer Temperatur von 900°C mit einer Haltezeit von sechs Stunden kalziniert. Dabei wird das Pulver mit einer Aufheizgeschwindigkeit von 3 K/min aufgeheizt und nach der Haltezeit ungeregelt abgekühlt (natürliche Abkühlung).

Das so erhaltene keramische Pulver wird mit Ethanol, Dispergiermittel und Binder zu der Suspension der vorstehend genannten Zusammensetzung vermengt.

Die so erhaltene Suspension wird im Nasssprühverfahren durch eine Sprühdüse auf die Trägerschicht aufgesprüht.

Dabei beträgt der Durchmesser der Düsenöffnung, mit welcher die Suspension zerstäubt wird, bis ungefähr 0,5 mm.

Der Spritzdruck, mit dem die Suspension zur Düse gefördert wird, beträgt beispielsweise 0,3 bar.

Der Sprühabstand der Düse zur Trägerschicht (Substrat) beträgt beispielsweise 15 cm.

Die Düse wird beispielsweise mit einer Geschwindigkeit von 230 mm/s über die Trägerschicht hinweg verfahren.

Die Schicht des Schutzschicht-Vormaterials wird in zwei bis vier Beschichtungszyklen, d.h. durch zwei- bis viermaliges Besprühen jedes Oberflächenbereichs der Trägerschicht, auf die Trägerschicht aufgetragen.

Alternativ zu dem vorstehend beschriebenen Nasssprühverfahren kann auch ein Siebdruckverfahren verwendet werden, um das keramische Pulver auf die Trägerschicht aufzubringen.

Für ein solches Siebdruckverfahren wird eine Paste hergestellt, welche beispielsweise 50 Gewichtsprozent des keramischen Pulvers, 47 Gewichtsprozent Terpineol und 3 Gewichtsprozent Ethylcellulose enthält.

Das keramische Pulver wird dabei in derselben Weise hergestellt, wie dies vorstehend im Zusammenhang mit dem Nasssprühverfahren beschrieben worden ist.

Zur Verkürzung der erforderlichen Mahldauer können dabei auch 2-4 Gewichtsprozent (bezogen auf das Gewicht des keramischen Pulvers) eines Dispergiermittels (beispielsweise Dolapix ET85) zugegeben werden, um die angegebene Korngröße zu erreichen.

Die Bestandteile der Paste werden in einem Walzenstuhl homogenisiert.

Anschließend erfolgt der Auftrag der Paste aus dem Schutzschicht-Vormaterial auf die Trägerschicht der Bipolarplatte mittels einer dem Fachmann an sich bekannten Siebdruckanlage.

Die Trägerschicht mit der, beispielsweise im Nasssprühverfahren oder im Siebdruckverfahren, aufgebrachten Schicht aus dem Schutzschicht-Vormaterial wird bei einer anschließenden Temperaturbehandlung unter abgesenktem Sauerstoffpartialdruck zunächst versintert.

Hierzu wird die Trägerschicht mit dem daran angeordneten Schutzschicht-Vormaterial in einen Sinterofen eingebracht.

Anschließend wird der Sauerstoffpartialdruck im Sinterofen abgesenkt, beispielsweise durch Spülen mittels eines Gemisches aus einem Inertgas (beispielsweise Argon) und beispielsweise 4 Molprozent Wasserstoff, welches zuvor bei einer Temperatur von 25°C befeuchtet worden ist, so dass das Gasgemisch einen Wassergehalt von ungefähr 3 Gewichtsprozent aufweist.

Nachdem auf diese Weise der Sauerstoffpartialdruck im Sinterofen abgesenkt worden ist, wird der Ofen beheizt, so dass die Trägerschicht mit dem daran angeordneten Vormaterial auf eine Sintertemperatur von mindestens ungefähr 750°C, vorzugsweise im Bereich von ungefähr 750°C bis 800°C, erwärmt wird. Auf dieser Sintertemperatur wird die Trägerschicht mit dem daran angeordneten Vormaterial in einer ersten Sinterphase während einer Sinterzeit von beispielsweise ungefähr 3 Stunden gehalten, wodurch die Schicht aus dem Schutzschicht-Vormaterial versintert wird.

Die Absenkung des Sauerstoffpartialdrucks bewirkt dabei eine Zerlegung der ursprünglichen Spinellstruktur der Sinterzusätze, wodurch die Reaktivität erhöht und der damit verbundene Verdichtungsprozess der Schutzschicht beschleunigt werden.

Nach Ablauf der Sinterzeit wird bei gleichbleibender Temperatur auf einen atmosphärischen Sauerstoffpartialdruck umgestellt, um in einer zweiten Sinterphase die erwünschte und chemisch stabile Spinellstruktur der Schutzschicht wiederherzustellen.

Dabei wird die Temperatur der Schutzschicht bzw. des Schutzschicht-Vormaterials zwischen dem Sintervorgang bei abgesenktem Sauerstoffpartialdruck und der Erhöhung des Sauerstoffpartialdrucks auf einen atmosphärischen Sauerstoffpartialdruck nicht auf eine Temperatur unterhalb von 750°C abgesenkt.

Der abgesenkte Sauerstoffpartialdruck während des Sintervorgangs beträgt beispielsweise ungefähr 10⁻¹⁸.

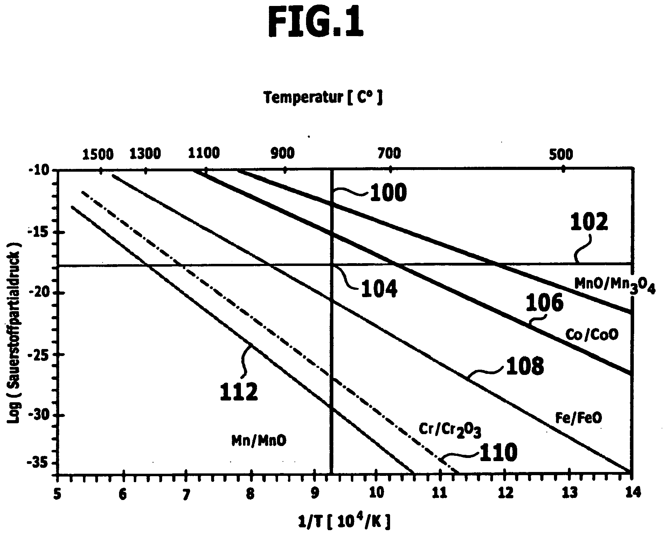

In dem in Fig. 1 dargestellten Ellingham-Diagramm ist die Sintertemperatur durch die Linie 100 und der reduzierte Sauerstoffpartialdruck während der ersten Sinterphase durch die Linie 102 angegeben.

Der Schnittpunkt 104 der Linien 100 und 102 charakterisiert die Bedingungen in der ersten Sinterphase.

Dieser Schnittpunkt 104 liegt im Ellingham-Diagramm unterhalb der Stabilitätsgrenze 106 von Kobalt, aber oberhalb der Stabilitätsgrenze 108 von Eisen, oberhalb der Stabilitätsgrenze 110 von Chrom und oberhalb der Stabilitätsgrenze 112 von Mangan.

Bei den Temperatur- und Sauerstoffpartialdruck-Bedingungen der ersten Sinterphase sind also die Oxide von Eisen, Chrom und Mangan stabil, während die Oxide von Kobalt instabil sind. Die Kobalt-Kationen zeigen unter diesen Bedingungen daher eine höhere Reaktivität und damit eine höhere Sinteraktivität, während unerwünschte Elemente aus dem Stahl der Trägerschicht, insbesondere Chrom, oxidisch vorliegen. Die oxidische Form bedeutet eine höhere chemische Stabilität und damit eine geringere Reaktionsfähigkeit. Dadurch kann in der ersten Sinterphase eine Verdichtung der Schutzschicht ohne die Diffusion von Chrom in die Schutzschicht hinein stattfinden.

Durch das Versintern der Schutzschicht in einer reduzierenden Atmosphäre (aufgrund der Absenkung des Sauerstoffpartialdrucks) während der ersten Sinterphase kann die Sintertemperatur, welche üblicherweise bis zu 900°C - 1.100°C beträgt, auf ungefähr 750°C bis 800°C herabgesetzt und die Sinterzeit, welche üblicherweise 10 Stunden beträgt, auf ungefähr 3 Stunden verkürzt werden. Hierdurch können Kosten bei der Herstellung der Bipolarplatte eingespart und korrosive Vorschädigungen (Degradation) der Trägerschicht und der Schutzschicht, insbesondere ein zu starkes Wachsen einer Chromoxidschicht zwischen der Trägerschicht und der Schutzschicht bei erhöhter Sintertemperatur, verringert werden.

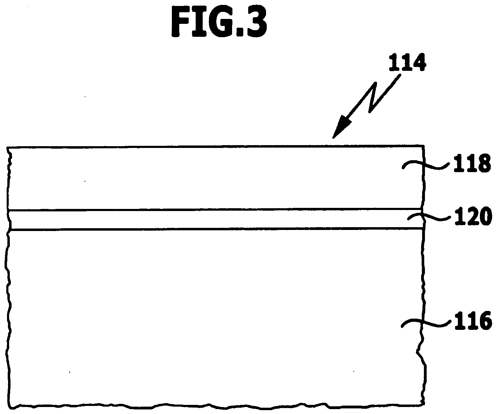

Die nach Abschluss der zweiten Sinterphase (unter atmosphärischem Sauerstoffpartialdruck) erhaltene, als Ganzes mit 114 bezeichnete Bipolarplatte aus der Trägerschicht 116, der Schutzschicht 118 mit der Zusammensetzung MnCo_{1,9}Fe_{0,1}O₄ und einer zwischen der Trägerschicht 116 und der Schutzschicht 118 gebildeten Zwischenschicht 120, welche Kobalt-Mangan-Eisen-Chromat enthält, ist in Fig. 3 in einem rein schematischen Längsschnitt und in Fig. 2 in einem realen, mikroskopischen Längsschnitt dargestellt.

Aufgrund der vergleichsweise geringen Sintertemperatur diffundiert nur wenig Chrom aus der Trägerschicht 116 heraus in die Zwischenschicht 120, so dass ein unerwünschtes Absinken des Chrom-Gehalts im Stahl der Trägerschicht 116 vermieden wird.

Durch das Vorhandensein von Eisen-Kationen im Vormaterial der Schutzschicht 118 wird die Mikrostruktur der Schutzschicht 118 verbessert; insbesondere weist die Schutzschicht 118 nur wenig Risse und Poren auf.

Die Eisen-Kationen wirken somit positiv auf das Sinterverhalten.

Die verbesserte Mikrostruktur der Schutzschicht 118, insbesondere das verringerte Auftreten von Rissen und Poren, ist ein Zeichen für eine hohe Defektfreiheit der Schutzschicht. Da die Chromdiffusion unter anderem auf dem Vorhandensein von Gitterdefekten beruht, wird durch eine möglichst defektfreie Schutzschicht 118 ein nachhaltiger Rückhalt von Chrom in der Trägerschicht 116 und der Zwischenschicht 120 gewährleistet.

Durch das Vorhandensein von Eisen-Kationen in der Schutzschicht 118 wird deren thermischer Ausdehnungskoeffizient α abgesenkt und somit besser an den thermischen Ausdehnungskoeffizienten des Stahlmaterials der Trägerschicht 116 und an den thermischen Ausdehnungskoeffizienten anderer Komponenten der Brennstoffzelleneinheit, in welcher die Bipolarplatte 114 eingesetzt werden soll, angepasst. Hierdurch entstehen bei Temperatur-Wechselzyklen geringere mechanische Spannungen im Brennstoffzellenstack.

Da die zweite Sinterphase bei atmosphärischem Sauerstoffpartialdruck in unmittelbarem Anschluss an die erste Sinterphase bei abgesenktem Sauerstoffpartialdruck durchgeführt wird, ist kein zweiter Temperaturzyklus bei der Herstellung der Bipolarplatte 116 erforderlich. Dies wirkt sich positiv auf die Kosten des Herstellungsverfahrens und auf die Mikrostruktur der Schutzschicht 118 der Bipolarplatte 114 aus.

Der thermische Ausdehnungskoeffizient α der auf die vorstehend beschriebene Weise hergestellten Schutzschicht 118 beträgt von 10·10⁻⁶K⁻¹ bis 20·10⁻⁶K⁻¹.

Die spezifische elektrische Leitfähigkeit σ der Schutzschicht 118 beträgt von 0,01 S/cm bis 200 S/cm.

## Patentansprüche

1. Bipolarplatte für eine Brennstoffzelleneinheit, wobei die Bipolarplatte (114) eine Trägerschicht (116) und eine Schutzschicht (118) umfasst, wobei die Schutzschicht (118) ein Oxidsystem umfasst, das ein mindestens ternäres Oxidsystem mit mindestens drei verschiedenen Arten von Metallkationen ist,
**dadurch gekennzeichnet,**
**dass** das Oxidsystem ungefähr die Zusammensetzung MnCo_{1,9}Fe_{0,1}O₄ aufweist.

2. Bipolarplatte nach Anspruch 1, **dadurch gekennzeichnet, dass** der thermische Ausdehnungskoeffizient α der Schutzschicht (118) von 10·10⁻⁶K⁻¹ bis 20·10⁻⁶K⁻¹ beträgt.

3. Bipolarplatte nach einem der Ansprüche 1 oder 2, **dadurch gekennzeichnet, dass** die spezifische elektrische Leitfähigkeit σ der Schutzschicht (118) von 0,01 S/cm bis 200 S/cm beträgt.

4. Verfahren zum Herstellen einer Schutzschicht (118) an einer Bipolarplatte (114) für eine Brennstoffzelleneinheit, umfassend folgende Verfahrensschritte:
- Aufbringen einer Schicht aus einem Schutzschicht-Vormaterial auf eine Trägerschicht (116) der Bipolarplatte (114);
- Erzeugen eines reduzierten Sauerstoffpartialdrucks;
- Erhöhen der Temperatur auf eine Sintertemperatur;
- anschließendes Erhöhen des Sauerstoffpartialdrucks;
- Abkühlen der Trägerschicht (116) und der daran ausgebildeten Schutzschicht (118);
wobei die Trägerschicht (116) mit dem Vormaterial zwischen dem Erhöhen der Temperatur auf Sintertemperatur und dem Erhöhen des Sauerstoffpartialdrucks nicht abgekühlt wird.

5. Verfahren nach Anspruch 4, **dadurch gekennzeichnet, dass** das Vormaterial nasschemisch auf die Trägerschicht (116) aufgebracht wird.

6. Verfahren nach Anspruch 5, **dadurch gekennzeichnet, dass** das Vormaterial auf die Trägerschicht (116) aufgesprüht wird.

7. Verfahren nach Anspruch 5, **dadurch gekennzeichnet, dass** das Vormaterial im Siebdruckverfahren auf die Trägerschicht (116) aufgebracht wird.

8. Verfahren nach einem der Ansprüche 4 bis 7, **dadurch gekennzeichnet, dass** das Vormaterial mindestens drei verschiedene Arten von Metallkationen umfasst.

9. Verfahren nach einem der Ansprüche 4 bis 8, **dadurch gekennzeichnet, dass** das Vormaterial Mn-Kationen umfasst.

10. Verfahren nach einem der Ansprüche 4 bis 9, **dadurch gekennzeichnet, dass** das Vormaterial Co- oder Cu-Kationen umfasst.

11. Verfahren nach einem der Ansprüche 4 bis 10, **dadurch gekennzeichnet, dass** das Vormaterial Fe- oder Ni-Kationen umfasst.

12. Verfahren nach einem der Ansprüche 4 bis 11, **dadurch gekennzeichnet, dass** das Vormaterial Mn-, Co- und Fe-Kationen umfasst.

13. Verfahren nach Anspruch 12, **dadurch gekennzeichnet, dass** die erzeugte Schutzschicht (118) ungefähr die Zusammensetzung MnCo₂₋ₓFeₓO₄ aufweist, mit 0<x<1.

14. Verfahren nach Anspruch 13, **dadurch gekennzeichnet, dass** die erzeugte Schutzschicht (118) ungefähr die Zusammensetzung MnCo_{1,9}Fe_{0,1}O₄ aufweist.

15. Verfahren nach einem der Ansprüche 4 bis 11, **dadurch gekennzeichnet, dass** das Vormaterial Mn-, Cu- und Fe-Kationen umfasst.

## Claims

1. Bipolar plate for a fuel cell unit, the bipolar plate (114) comprising a carrier layer (116) and a protective layer (118), the protective layer (118) comprising an oxide system, which is an at least ternary oxide system with at least three different types of metal cations, **characterised in that** the oxide system has approximately the composition MnCo_{1.9}Fe_{0.1}O₄.

2. Bipolar plate according to claim 1, **characterised in that** the thermal coefficient of expansion α of the protective layer (118) is from 10·10⁻⁶K⁻¹ to 20·10⁻⁶K⁻¹.

3. Bipolar plate according to either of claims 1 or 2, **characterised in that** the specific electrical conductivity σ of the protective layer (118) is from 0.01 S/cm to 200 S/cm.

4. Method for producing a protective layer (118) on a bipolar plate (114) for a fuel cell unit, comprising the following method steps:
- applying a layer of a protective layer starting material to a carrier layer (116) of the bipolar plate (114);
- generating a reduced oxygen partial pressure;
- increasing the temperature to a sintering temperature;
- subsequently increasing the oxygen partial pressure;
- cooling the carrier layer (116) and the protective layer (118) formed thereon,
wherein the carrier layer (116) with the starting material is not cooled between the increasing of the temperature to sintering temperature and the increasing of the oxygen partial pressure.

5. Method according to claim 4, **characterised in that** the starting material is applied to the carrier layer (116) in a wet chemical manner.

6. Method according to claim 5, **characterised in that** the starting material is sprayed onto the carrier layer (116).

7. Method according to claim 5, **characterised in that** the starting material is applied to the carrier layer (116) by screen printing.

8. Method according to any one of claims 4 to 7, **characterised in that** the starting material comprises at least three different types of metal cations.

9. Method according to any one of claims 4 to 8, **characterised in that** the starting material comprises Mn cations.

10. Method according to any one of claims 4 to 9, **characterised in that** the starting material comprises Co or Cu cations.

11. Method according to any one of claims 4 to 10, **characterised in that** the starting material comprises Fe or Ni cations.

12. Method according to any one of claims 4 to 11, **characterised in that** the starting material comprises Mn, Co and Fe cations.

13. Method according to claim 12, **characterised in that** the protective layer (118) produced has approximately the composition MnCo₂₋ₓFeₓO₄, wherein 0<x<1.

14. Method according to claim 13, **characterised in that** the protective layer (118) generated has approximately the composition MnCo_{1.9}Fe_{0.1}O₄.

15. Method according to any one of claims 4 to 11, **characterised in that** the starting material comprises Mn, Cu and Fe cations.

## Revendications

1. Plaque bipolaire pour une unité de pile à combustible, dans laquelle la plaque bipolaire (114) comprend une couche de support (116) et une couche de protection (118), dans laquelle la couche de protection (118) comprend un système d'oxydes, qui est un système d'oxydes au moins ternaire comportant au moins trois types différents de cations métalliques, **caractérisée en ce que** le système d'oxydes présente environ la composition MnCo_{1,9}Fe_{0,1}O₄.

2. Plaque bipolaire selon la revendication 1, **caractérisée en ce que** le coefficient de dilatation thermique α de la couche de protection (118) vaut de 10·10⁻⁶K⁻¹ à 20·10⁻⁶K⁻¹.

3. Plaque bipolaire selon l'une quelconque des revendications 1 ou 2, **caractérisée en ce que** la conductibilité électrique spécifique σ de la couche de protection (118) vaut de 0,01 S/ cm à 200 S/cm.

4. Procédé de réalisation d'une couche de protection (118) sur une plaque bipolaire (114) pour une unité de pile à combustible, comprenant les étapes de procédé suivantes:
- déposer une couche en un matériau précurseur de couche de protection sur une couche de support (116) de la plaque bipolaire (114) ;
- produire une pression partielle d'oxygène réduite ;
- augmenter la température à une température de frittage ;
- augmenter ensuite la pression partielle d'oxygène ;
- refroidir la couche de support (116) et la couche de protection (118) formée sur celle-ci ;
dans lequel on ne refroidit pas la couche de support (116) avec le matériau précurseur entre l'augmentation de la température à une température de frittage et l'augmentation de la pression partielle d'oxygène.

5. Procédé selon la revendication 4, **caractérisé en ce que** l'on dépose le matériau précurseur sur la couche de support (116) par voie chimique humide.

6. Procédé selon la revendication 5, **caractérisé en ce que** l'on pulvérise le matériau précurseur sur la couche de support (116).

7. Procédé selon la revendication 5, **caractérisé en ce que** l'on dépose le matériau précurseur sur la couche de support (116) par un procédé de sérigraphie.

8. Procédé selon l'une quelconque des revendications 4 à 7, **caractérisé en ce que** le matériau précurseur comporte au moins trois types différents de cations métalliques.

9. Procédé selon l'une quelconque des revendications 4 à 8, **caractérisé en ce que** le matériau précurseur contient des cations Mn.

10. Procédé selon l'une quelconque des revendications 4 à 9, **caractérisé en ce que** le matériau précurseur contient des cations Co ou Cu.

11. Procédé selon l'une quelconque des revendications 4 à 10, **caractérisé en ce que** le matériau précurseur contient des cations Fe ou Ni.

12. Procédé selon l'une quelconque des revendications 4 à 11, **caractérisé en ce que** le matériau précurseur contient des cations Mn, Co et Fe.

13. Procédé selon la revendication 12, **caractérisé en ce que** la couche de protection produite (118) présente environ la composition MnCo₂₋ₓFeₓO₄, avec 0<x<1.

14. Procédé selon la revendication 13, **caractérisé en ce que** la couche de protection produite (118) présente environ la composition MnCo_{1,9}Fe_{0,1}O₄.

15. Procédé selon l'une quelconque des revendications 4 à 11, **caractérisé en ce que** le matériau précurseur contient des cations Mn, Cu et Fe.
